Europäisches Patentamt

European Patent Office

Office européen des brevets

(11) Numéro de publication: **0 275 780 B1**

## FASCICULE DE BREVET EUROPEEN

(45) Date de publication de fascicule du brevet:
13.11.91

(51) Int. Cl.⁵: **B01F 3/02**, B01J 12/00, F23D 14/62, //C01B3/36

(21) Numéro de dépôt: 87402963.0

(22) Date de dépôt: 22.12.87

(54) **Dispositif d'introduction de gaz comprenant des tubes comportant des zones rétreintes.**

(30) Priorité: 23.12.86 FR 8618032

(43) Date de publication de la demande:
27.07.88 Bulletin 88/30

(45) Mention de la délivrance du brevet:
13.11.91 Bulletin 91/46

(84) Etats contractants désignés:
BE DE GB IT

(56) Documents cités:
EP-A- 0 037 961
FR-A- 2 327 976
US-A- 4 351 647

(73) Titulaire: **INSTITUT FRANCAIS DU PETROLE**
**4, Avenue de Bois-Préau**
**F-92506 Rueil-Malmaison Cédex(FR)**

(72) Inventeur: **Goldenberg, Emmanuel**
**33, avenue du Maréchal Foch**
**F-78300 Poissy(FR)**

## Description

La présente invention concerne un dispositif d'introduction de gaz dans une zone de mélange, telle celle d'un réacteur.

La présente invention concerne aussi un réacteur utilisant ce dispositif d'introduction du gaz.

Le dispositif selon l'invention permet de réaliser l'introduction de deux gaz, dont le mélange peut être explosif, dans un réacteur afin de les faire réagir.

Le dispositif selon la présente invention est de réalisation particulièrement simple.

Dans le cas d'une application à un réacteur, le dispositif selon l'invention permet d'acheminer deux gaz par deux circuits séparés jusqu'à une zone où ils réagissent entre eux par un processus de diffusion.

La présente invention est notamment applicable au procédé de fabrication de gaz de synthèse, par exemple pour réaliser l'oxydation contrôlée du méthane.

Le dispositif selon l'invention permet l'introduction de deux gaz dans un réacteur sans qu'il y ait mélange préalable de ces deux gaz, tout en ayant une bonne maîtrise des vitesses d'introduction des gaz dans le réacteur. Par exemple, le dispositif selon l'invention permet d'obtenir des écoulements établis et d'avoir des vitesses d'écoulement sensiblement uniformes en direction et/ou en vitesse pour chacun des gaz avant leur introduction dans la zone de mélange et ainsi de contrôler la réaction.

Le dispositif selon l'invention comporte plusieurs petits tubes cylindriques assemblés entre eux de manière jointives par une enveloppe externe.

Selon la présente invention, l'un des gaz servant à la réaction circule à l'intérieur des petits tubes, l'autre gaz circule dans les espaces interstitiels délimités par les parois extérieures des différents petits tubes.

A l'une des extrémités du faisceau formé par l'ensemble des petits tubes, on bouche sur une certaine hauteur les différents interstices, isolant ainsi les deux circuits respectivement définis par l'intérieur des différents petits tubes et par les espaces interstitiels.

Ainsi le gaz amené à cette extrémité cheminera à l'intérieur des petits tubes pour sortir à l'autre extrémité du faisceau, au niveau de laquelle doit s'effectuer la réaction ou le mélange.

Afin de permettre l'introduction de l'autre gaz dans les différents espaces interstitiels, les petits tubes comportent, à un même niveau, une zone rétreinte. Il se crée ainsi un réseau de canaux permettant l'alimentation en gaz des différents espaces interstitiels.

Le gaz peut être amené à ce réseau par une canalisation fixée ou faisant partie de l'enveloppe externe et débouchant au niveau des zones rétreintes des petits tubes.

Il est possible selon la présente invention d'utiliser plusieurs éléments ou cellules pour un même réacteur. On entend par cellule ou élément un ensemble comportant un dispositif d'introduction des gaz et la zone de mélange de ces gaz.

Il est également possible selon la présente invention de refroidir ou de réchauffer les gaz circulant dans un élément, en créant une circulation d'un fluide caloporteur autour du cylindre ou des cylindres externes.

Ainsi la présente invention concerne un dispositif d'acheminement ou d'introduction séparé d'au moins deux gaz jusque dans une zone de mélange notamment par diffusion et éventuellement de réaction. Ce dispositif comporte plusieurs tubes, des moyens d'alimentation de ces tubes en l'un des gaz. Il comporte en outre des moyens de maintien des tubes entre eux. Ces moyens maintiennent les tubes de manière jointive. Les tubes définissent entre eux des espaces vides ou intervalles inter-tubes.

Certains au moins desdits tubes comportent des zones rétreintes placées sensiblement à un même niveau des tubes de manière à former un réseau de distribution d'un autre gaz à certains au moins des intervalles inter-tubes.

Les tubes peuvent avoir sensiblement la forme de cylindres de révolution.

Les moyens de maintien pourront comporter une enveloppe dans laquelle pourront être placés les tubes. Cette enveloppe pourra comporter un orifice d'introduction de l'autre gaz au niveau des zones rétreintes.

L'enveloppe pourra se prolonger au-delà de l'extrémité de sortie des tubes et délimiter ainsi la zone de mélange ou de réaction. L'ensemble du dispositif d'introduction et de la zone de mélange forme une cellule.

L'enveloppe pourra se prolonger au-delà des extrémités des tubes opposées à leurs extrémités de sortie.

Les espaces inter-tubes pourront comporter des moyens d'isolation de ces espaces relativement à la chambre formée par le prolongement de ladite enveloppe.

Cette chambre pourra comporter un orifice d'alimentation en gaz. Cette chambre pourra servir de chambre d'alimentation des tubes.

La présente invention concerne également un réacteur permettant de réaliser une réaction entre deux gaz comportant au moins une cellule.

Cette cellule pourra être placée dans une enceinte étanche contenant un fluide caloporteur.

Le réacteur pourra comporter plusieurs cellules. Il pourra également dans ce cas comporter une enceinte étanche contenant un fluide caloporteur.

L'enceinte pourra comporter au moins un orifice d'entrée et au moins un orifice de sortie du fluide caloporteur de manière à en assurer la circulation.

La cellule pourra comporter en outre un orifice d'introduction d'un troisième fluide sensiblement dans la zone de mélange tel de la vapeur ou des produits réactifs.

Bien entendu, le dispositif selon l'invention pourra être utilisé en tant que brûleur.

On ne sortira pas du cadre de la présente invention si les parois de la cellule comportent sur au moins les zones les plus exposées aux hautes températures, un matériau réfractaire, par exemple, ces parois peuvent être chemisées en matériau céramique.

La présente invention sera mieux comprise et ses avantages apparaîtront plus clairement à la description qui suit d'exemples, nullement limitatifs, de modes particuliers de réalisation illustrés par les figures ci-annexées parmi lesquelles :

- la figure 1 montre une cellule équipée du dispositif d'introduction selon l'invention,
- les figures 2 et 3 représentent deux vues en coupe de la figure 1, respectivement coupe AA et coupe BB,
- la figure 4 illustre un détail d'un tube d'introduction du dispositif selon l'invention,
- la figure 5 représente un mode de réalisation comportant des tubes d'introduction de diamètres différents,
- la figure 6 montre un réacteur comportant plusieurs enceintes, et
- la figure 7 représente une vue en coupe du réacteur de la figure 6.

L'exemple particulier décrit concerne un dispositif d'introduction de deux gaz devant réagir l'un avec l'autre et dont le mélange peut être explosif.

Le présent exemple concerne également une cellule équipée de ce dispositif d'introduction du gaz.

La présente invention peut être appliquée à l'obtention de gaz de synthèse à partir d'un carburant tel des hydrocarbures et un comburant tel de l'oxygène.

Ainsi les deux gaz pourront être du méthane ou du gaz naturel et de l'oxygène.

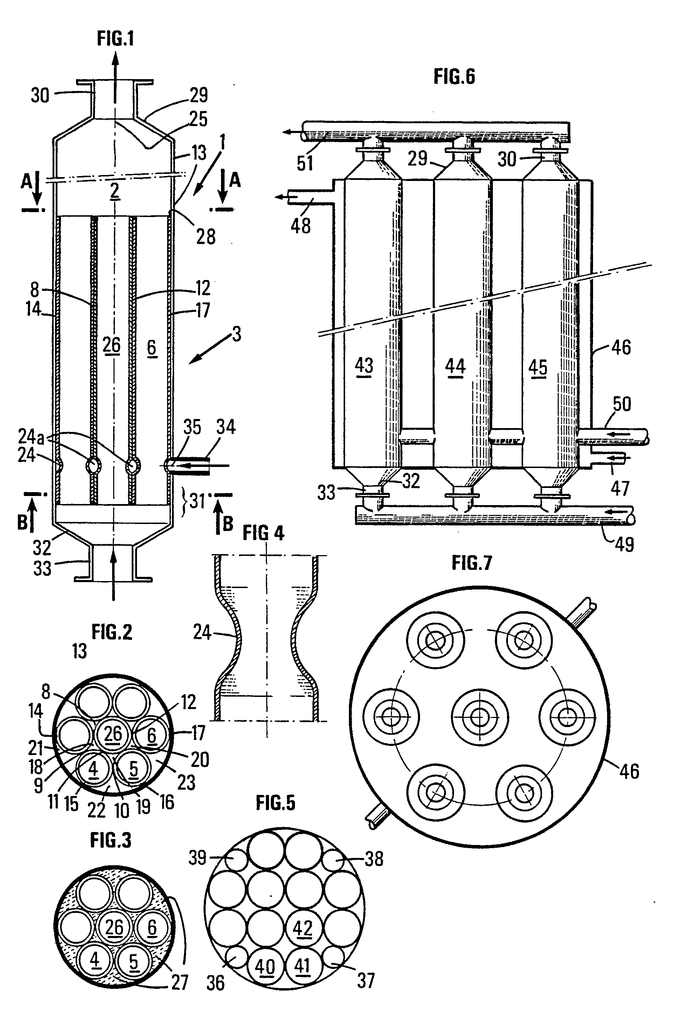

Sur la figure 1 la référence 1 désigne la cellule dans son ensemble. Celle-ci comporte une zone de mélange ou de réaction 2 et le dispositif 3 d'introduction du gaz. La référence 25 désigne l'axe de la cellule.

Le dispositif d'introduction du gaz 3 comporte plusieurs tubes 4, 5, 6 et 7 sensiblement cylindriques.

Ces tubes sont assemblés de manière jointive selon des génératrices 8, 9, 10, 11, 12.

Ces tubes sont maintenus dans une enveloppe externe 13 qui est elle-même jointive aux tubes extérieurs suivant des génératrices 14, 15, 16, 17.

Ces tubes qui sont des cylindres de révolution définissent entre eux des espaces libres inter-tubes 18, 19, 20.

Ces espaces inter-tubes sont délimités sur la rangée extérieure des tubes 4, 5, 6 avec l'aide de la paroi interne de l'enveloppe externe 13. Les espaces inter-tubes ainsi délimités portent les références 21, 22, 23.

Certains des tubes comportent à leur partie inférieure une zone rétreinte 24 (voir figures 1 et 4).

Ces zones rétreintes, ou rétreints, sont sensiblement situés à un même niveau de manière à former un réseau de canalisations 24a d'alimentation des espaces inter-tubes.

Il est bien certain que tous les tubes n'ont pas nécessairement besoin de comporter un rétreint 24. Ainsi, dans les cas des figures 1, 2 et 3, le tube central 26 n'a pas besoin de comporter de rétreint puisque ce sont les rétreints des tubes qui l'entourent qui vont servir à alimenter les espaces inter-tube qui jouxtent le tube central.

A l'extrémité inférieure, considérée relativement au sens de la figure 1, des tubes, les espaces inter-tubes 18, 19, 20, 21, 22 et 23 sont bouchés, par exemple, par un ciment étanche 27 ou par une ou plusieurs plaques ou parois éventuellement sondée ou frettée etc. Ceci permet notamment de maintenir les tubes en place en fixant ces plaques ou parois à l'enveloppe externe 21. Ainsi le gaz qui alimente le réseau constitué par les zones rétreintes est acheminé par les espaces inter-tubes vers la zone de mélange ou de réaction 2.

La zone rétreinte 24 peut avoir la forme d'un tore ou avoir toute autre forme dès l'instant qu'elle permet d'alimenter les espaces inter-tubes que l'on souhaite alimenter.

Sur la figure 1 l'enveloppe externe 13 se prolonge au-delà de l'extrémité 28 par laquelle les gaz sortent de manière à délimiter la zone de réaction 2. Cette enveloppe 13 se termine par un toit 29 comportant un orifice 30 de sortie des effluents.

A la partie inférieure de la figure 1, l'enveloppe 13 se prolonge également au-delà de l'extrémité 31 des tubes, de manière à former une chambre 32 d'alimentation des tubes en l'un des gaz.

Cette chambre comporte un orifice 33 d'alimentation en gaz.

Bien entendu cette chambre alimente les tubes et non les espaces inter-tubes, cela du fait des moyens de bouchage (ciment ou plaques ou parois) 27 des espaces inter-tubes.

L'alimentation des espaces inter-tubes en gaz se fait par un conduit 34 qui débouche sur un orifice 35 pratiqué sur l'enveloppe externe 13 au niveau des zones rétreintes 24.

L'enveloppe externe 13 pourra d'ailleurs comporter au niveau des zones rétreintes 24 une gorge, de manière à favoriser l'alimentation des diverses zones rétreintes 24 et donc du réseau 24a.

Bien entendu le diamètre des tubes peut être différent d'un tube à l'autre.

La figure 5 illustre un tel mode de réalisation. Sur cette figure, les tubes 36, 37, 38 et 39 sont d'un diamètre sensiblement plus petit que celui des autres tubes par exemple 40, 41, 42.

Le nombre et/ou la forme des tubes permettent de contrôler les vitesses d'introduction des gaz et donc les vitesses de mélange de ces derniers.

Le fonctionnement du dispositif selon l'invention s'explique de lui-même. Les gaz provenant par la chambre 33 alimentent l'intérieur des tubes et ressortent dans la zone de mélange 2.

Les gaz arrivant par la canalisation 34 sont répartis par le réseau 24a constitué des différentes zones rétreintes 24 pour alimenter les espaces inter-tubes et ressortir dans la zone de mélange 2.

Les longueurs des tubes et des espaces inter-tubes permettent d'y obtenir des écoulements établis de manière que la structure des gaz débouchant dans la zone de mélange 2 soit régulière.

Les figures 6 et 7 illustrent un réacteur comportant plusieurs cellules 43, 44, 45.

Ces cellules au nombre de 7 (fig. 7) sont placées dans une enceinte étanche 46. De préférence ces cellules ne sont pas jointives aux parois de cette enceinte.

Celle-ci peut être remplie d'un fluide caloporteur, de manière à échanger de la chaleur avec les cellules 43, 44, 45. Ce fluide peut apporter ou retirer de la chaleur au réacteur suivant les besoins.

Les canalisations 47 et 48 connectées à l'enceinte 46 y permettent la circulation du fluide caloporteur.

Les canalisations 49 permettent de fournir en gaz les chambres 32 d'alimentation des tubes des différentes cellules 3, alors que les canalisations 50 permettent de fournir en gaz le réseau d'alimentation des espaces inter-tubes des différentes cellules.

Les canalisation 51 collectent les effluents provenant des différentes cellules.

Le type de réacteur à plusieurs cellules peut être appliqué à l'obtention de gaz de synthèse à partir de gaz comburant, tel de l'oxygène, et de gaz carburant, tel des gaz d'hydrocarbures.

**Revendications**

1. Dispositif d'acheminement séparé d'au moins deux gaz jusque dans une zone de mélange, ce dispositif comportant plusieurs tubes, des moyens d'alimentation de ces tubes en l'un des gaz, caractérisé en ce qu'il comporte des moyens de maintien (13) des tubes (4, 5, 6) entre-eux, les tubes étant maintenus jointifs par lesdits moyens et définissant des espaces vides ou intervalles inter-tubes (18 à 23), en ce que certains au moins desdits tubes comportent des zones rétreintes (24) placées sensiblement à un même niveau de manière à former un réseau de distribution (24a) de l'autre gaz à certains au moins des intervalles inter-tubes (18 à 23).

2. Dispositif selon la revendication 1, caractérisé en ce que lesdits tubes (4, 5, 6) ont la forme de cylindre de révolution.

3. Dispositif selon l'une des revendications 1 ou 2, caractérisé en ce que lesdits moyens de maintien comporte une enveloppe (13) dans laquelle sont placés lesdits tubes (4, 5, 6) et en ce que ladite enveloppe comporte un orifice d'introduction (35) de l'autre gaz au niveau desdites zones rétreintes (24).

4. Dispositif selon la revendication 3, caractérisé en ce que ladite enveloppe (13) se prolonge au-delà de l'extrémité de sortie des tubes délimitant ainsi la zone de mélange (2), l'ensemble dudit dispositif et de ladite zone de mélange formant une cellule (1).

5. Dispositif selon l'une des revendications 3 ou 4, caractérisé en ce que ladite enveloppe (13) se prolonge au-delà des extrémités desdits tube, opposées à leurs extrémités de sortie, et en ce que les espaces inter-tubes comportent des moyens d'isolation (27) desdits espaces de la chambre (32) formée par le prolongement de ladite enveloppe, cette chambre comportant un orifice (33) d'alimentation en gaz, ladite chambre servant de chambre d'alimentation desdits tubes.

6. Utilisation du dispositif selon l'une des revendications 1 à 5 en tant que brûleur.

7. Réacteur permettant de réaliser une réaction entre deux gaz, caractérisé en ce qu'il comporte au moins une cellule (1) selon la revendication 4.

8. Réacteur selon la revendication 7, caractérisé en ce que ladite cellule est placée dans une enceinte étanche (46) contenant un fluide caloporteur.

9. Réacteur selon la revendication 7, caractérisé en ce qu'il comporte plusieurs cellules (43, 44, 45).

10. Réacteur selon la revendication 9, caractérisé en ce qu'il comporte une enceinte étanche (46) contenant un fluide caloporteur.

11. Réacteur selon l'une des revendications 8 ou 10, caractérisé en ce que ladite enceinte comporte au moins un orifice d'entrée et au moins un orifice de sortie (47, 48) dudit fluide caloporteur, de manière à en assurer la circulation.

**Claims**

1. A device for separately conveying at least two gases to a mixing zone, the device comprising several tubes, a means for supplying these with one of the gases, characterised in that it comprises a means of holding (13) the tubes (4, 5, 6) in position in relation to each other, the tubes being held along common lines of contact with each other and forming empty spaces or intervals between the tubes (18 to 23), so that at least some of the tubes have a narrow section (24) located at the same level so as to form a distribution network (24a) for the other gas in at least some of the spaces between the tubes (18 to 23).

2. A device according to claim 1, characterised in that the tubes (4, 5, 6) are of cylindrical form.

3. A device according to claim 1 or 2, characterised in that the means of supporting the tubes in position comprises a casing (13) within which the tubes (4, 5, 6) are located and such that the casing has an inlet (35) for the other gas at the level of the narrow sections (24).

4. A device according to claim 3, characterised in that the casing (13) extends beyond the exit end of the tubes, thus marking the start of the mixing zone (2), the whole of the device and the mixing zone forming a cell (1).

5. A device according to claim 3 or 4, characterised in that the casing (13) extends beyond the ends of the tubes, opposite to their outlet ends, and in that the spaces between the tubes are fitted with a means of isolation (27) of the spaces from the chamber (32) formed by the extension of the casing, this chamber having a gas feed inlet (33) for the supply of gas from the chamber to the tubes.

6. A device according to claims 1 to 5 that may be used as a burner.

7. A reactor that enables a reaction between two gases, characterised in that it comprises at least one cell (1) in accordance with claim 4.

8. A reactor according to claim 7, characterised in that the cell is arranged in a sealed housing (46) containing a heat-carrying fluid.

9. A reactor according to claim 7, characterised in that it comprises several cells (43, 44, 45).

10. A reactor according to claim 9, characterised in that it comprises a sealed housing (46) containing a heat-carrying fluid.

11. A reactor according to one of claims 8 or 10, characterised in that the housing comprises at least one inlet and at least one outlet (47, 48) for the heat-carrying fluid, in such a way as to enable circulation thereof.

**Patentansprüche**

1. Vorrichtung zum getrennten Zuführen wenigstens zweier Gase bis in eine Mischzone, wobei die Vorrichtung mehrere Rohre sowie Mittel zum Speisen dieser Rohre mit einem der Gase umfaßt, dadurch gekennzeichnet, daß sie Mittel (13) zum Halten der Rohre (4, 5, 6) untereinander umfaßt, wobei die Rohre aneinander grenzend durch diese Mittel gehalten werden und Hohlräume oder Zwischenrohrintervalle (18 bis 23) bilden, daß wenigstens gewisse dieser Rohre eingeschnürte Zonen (24) umfassen, die im wesentlichen auf ein und dem gleichen Niveau angeordnet sind, derart, daß ein Verteilernetz (24a) für das andere Gas in wenigstens gewissen der Zwischenrohrintervalle (18 bis 23) gebildet wird.

2. Vorrichtung nach Anspruch 1, dadurch gekennzeichnet, daß diese Rohre (4, 5, 6) Umdrehungszylinderform haben.

3. Vorrichtung nach einem der Ansprüche 1 oder 2, dadurch gekennzeichnet, daß diese Haltemittel einen Mantel (13) umfassen, in dem diese Rohre (4, 5, 6) angeordnet sind und daß dieser Mantel eine Einführöffnung (35) für das andere Gas in Höhe dieser eingeschnürten Zonen (24) umfaßt.

4. Vorrichtung nach Anspruch 3, dadurch gekennzeichnet, daß dieser Mantel (13) über das Austrittsende der Rohre hinaus verlängert ist und so die Mischzone (2) begrenzt, wobei die Gesamtheit dieser Vorrichtung und dieser Mischzone eine Zelle (1) bildet.

5. Vorrichtung nach einem der Ansprüche 3 oder 4, dadurch gekennzeichnet, daß dieser Mantel (13) sich über die Enden dieser Rohre, die ihren Eintrittsenden gegenüberliegen, hinaus verlängert und daß die Zwischenrohrräume Mittel zum Isolieren (27) dieser Räume der Kammer (32) umfassen, die durch die Verlängerung dieses Mantels gebildet ist, wobei diese Kammer eine Gasspeiseöffnung (33) umfaßt, und diese Kammer als Speisekammer für diese Rohre dient.

6. Verwendung der Vorrichtung nach einem der Ansprüche 1 bis 5 als Brenner.

7. Reaktor, der die Durchführung einer Reaktion zwischen zwei Gasen ermöglicht, dadurch gekennzeichnet, daß er wenigstens eine Zelle (1) nach Anspruch 4 umfaßt.

8. Reaktor nach Anspruch 7, dadurch gekennzeichnet, daß diese Zelle in einem dichten ein Wärmeträgerfluid enthaltenden Raum (46) angeordnet ist.

9. Reaktor nach Anspruch 7, dadurch gekennzeichnet, daß er mehrere Zellen (43, 44, 45) umfaßt.

10. Reaktor nach Anspruch 9, dadurch gekennzeichnet, daß er einen dichten ein Wärmeträgerfluid enthaltenden Raum (46) umfaßt.

11. Reaktor nach einem der Ansprüche 8 oder 10, dadurch gekennzeichnet, daß dieser Raum wenigstens eine Eintrittsöffnung und wenigstens eine Austrittsöffnung (47, 48) für dieses Wärmeträgerfluid umfaßt, derart, daß dessen Zirkulation sichergestellt ist.

**FIG.1**

**FIG.6**

**FIG 4**

**FIG.7**

**FIG.2**

**FIG.5**

**FIG.3**